# EUROPÄISCHE PATENTSCHRIFT

(11) **EP 2 100 723 B1**
(45) Veröffentlichungstag und Bekanntmachung des Hinweises auf die Patenterteilung: **16.05.2012**
(21) Anmeldenummer: 09154077.3
(22) Anmeldetag: 02.03.2009
(51) Int. Cl.: B32B 25/08, C09J 7/02, B32B 25/14, B32B 25/02, B32B 27/32, B32B 27/20, B32B 5/18, B32B 7/02

(54) **Klebeartikel mit einer Folienanordnung**
Adhesive article comprising a film assembly
Article adhésif comprenant un agencement de feuilles

(30) Priorität: 11.03.2008 DE 102008013689
(43) Veröffentlichungstag der Anmeldung: 16.09.2009
(73) Patentinhaber: TESA SE, 20253 Hamburg (DE)
(72) Erfinder: Michel, Uwe, 49321 Michigan (US); Müssig, Bernhard, Dr., 21218, Seevetal (DE)

(56) Entgegenhaltungen:
- DE-A1- 2 926 110
- DE-A1- 19 923 780
- US-A- 5 776 730
- US-A1- 2003 040 582
- US-A1- 2006 286 386

## Beschreibung

Die vorliegende Erfindung betrifft einen Klebeartikel mit einer Folienanordnung gemäß dem Oberbegriff von Anspruch 1.

Aus dem Stand der Technik ist die Verwendung von mehrschichtigen Folienanordnungen unterschiedlichster Art und Zusammensetzung bekannt. Derartige Folienanordnungen werden üblicherweise zu den verschiedensten Zwecken eingesetzt, beispielsweise auch als Träger eines Klebeartikels. Diesen herkömmlichen Folienanordnungen ist gemeinsam, dass sie möglichst gleichmäßig und eben ausgebildet sein sollen, um beispielsweise Schwankungen der optischen Eigenschaften (Transparenz), der Oberflächenrauheit etc. zu vermeiden.

Bekannte Folienanordnungen können beispielsweise unverstreckte Folien aus Thermoplasten enthalten. Diese lassen sich durch Zugbeanspruchung dehnen. Dabei entsteht eine Folie mit größerer Länge, geringerer Dicke und in der Regel geringerer Breite. Die Folie bleibt dabei im Wesentlichen flach. Besteht die Folie aus einem teilkristallinen Thermoplasten, z. B ein Polyolefin, erfolgt die Verringerung der Breite und Dicke nicht gleichmäßig sondern es bildet sich lokal eine höherkristalline Einschnürung (Neck-in) aus, welche mit fortlaufender Dehnung weiter zunimmt. Nach einer Relaxation bleibt die Folie weiterhin flach (im Wesentlichen zweidimensional), sie weist eine geringere Breite und Dicke und eine größere Länge als vor dem Zugversuch auf.

Der vorliegenden Erfindung liegt das Problem zugrunde, einen Klebeartikel mit einer Folienanordnung anzugeben, der weitere Einsatzmöglichkeiten eröffnet.

Die vorliegende Erfindung löst das zuvor beschriebene Problem bei einem Klebeartikel mit einer Folienanordnung mit den Merkmalen des Oberbegriffs von Anspruch 1 durch die kennzeichnenden Merkmale von Anspruch 1. Bevorzugte Weiterbildungen sind Gegenstand der Unteransprüche.

Der vorliegenden Erfindung liegt die Erkenntnis zugrunde, dass ein Klebeartikel mit einer Folienanordnung nicht in jedem Fall eben ausgebildet und bei Verstreckung eben bleiben muss. Vielmehr kann es auch wünschenswert sein, einen Klebeartikel mit einer Folienanordnung zu schaffen, die nach Dehnung und anschließender Relaxation nicht eben bleibt, sondern eine dreidimensionale Struktur aufweist. Eine derartige Folienanordnung eignet sich beispielsweise um eine Wiederverwendbarkeit der Folienanordnung zu unterbinden, um eine zuvor erfolgte Dehnung optisch sichtbar zu machen oder um ein Ablösen der Folienanordnung von einem Untergrund zu unterstützen.

Die Folienanordnung des erfindungsgemäßen Klebeartikels weist zumindest eine Schicht A aus einem Polymer mit einem Zugverformungsrest von mehr als 60 % und eine Schicht B aus einem Polymer mit einem Zugverformungsrest von weniger als 50 % auf. Dabei ist die Folienanordnung zunächst unverstreckt ausgebildet, d.h. eine Zugverformung hat vor der Verwendung der Folie nicht stattgefunden. Die Folie bildet nach Dehnung (Verstreckung) von um mindestens 100 %, vorzugsweise von um mindestens 500 %, und nachfolgender Relaxation eine strukturierte Oberfläche und/oder bevorzugt einen dreidimensional geformten Körper aus. Da diese Verformung irreversibel ist kann die Folie als Indikator für eine Zugbelastung und deren Höhe bzw. daraus resultierender Deformation eingesetzt werden.

Der Zugverformungsrest ist definiert als die in einem Probenkörper im entlasteten Zustand verbleibende Verformung nachdem dieser für eine bestimmte Zeit (vorliegend 1 Minute) einer konstanten Dehnung ausgesetzt war (DIN ISO 2285:2003-07). Der Zugverformungsrest wird als Prozentsatz der Dehnung angegeben.

Die Folienanordnung kann neben den Schichten A, B auch weitere Schichten aufweisen, die die dreidimensionale Verformung bei Dehnung unterstützen oder aber die vollständig andere Aufgaben wahrnehmen. Insbesondere sind beispielsweise eine oder mehrere Klebeschichten vorgesehen, um die Folienanordnung als Klebeartikel, insbesondere als Klebeband oder Etikett, auszubilden. Bevorzugt ist in jedem Fall aber auch bei einer mehrschichtigen Folienanordnung, dass die Schichten A, B unmittelbar übereinander angeordnet sind. Diese Anordnung ermöglicht die bestmögliche Abstimmung der beiden Schichten zueinander, um eine gewünschte Verformung zu erzielen.

Bevorzugt weist die Schicht A der Folienanordnung einen Zugverformungsrest von mindestens 70 %, weiter bevorzugt von mindestens 90 % auf. Die Schicht B weist demgegenüber bevorzugt einen Zugverformungsrest von maximal 40 % auf. Insbesondere sollte die Differenz des Zugverformungsrests der beiden Schichten A, B möglichst groß sein, da durch eine entsprechende Ausgestaltung eine besonders starke Verformung gewährleistet werden kann. Gleichzeitig wird durch eine starke Verformung auch sichergestellt, dass die Irreversibilität auch unter zusätzlichen externen Einflüssen, wie zum Beispiel hoher Temperatur, gewährleistet ist.

In weiter bevorzugter Ausgestaltung basieren die beiden Schichten A, B auf gleichartigen Polymeren, unterscheiden sich also lediglich hinsichtlich ihrer Gesamtzusammensetzung, nicht aber hinsichtlich des Hauptbestandteils. Eine derartige Ausgestaltung ist herstellungstechnisch besonders vorteilhaft, da die beiden Schichten beispielsweise in gleichen Temperaturbereichen verarbeitet werden können. Darüber hinaus vereinfacht eine ähnliche Ausbildung der beiden Schichten A, B hinsichtlich ihrer Bestandteile auch die Anpassung an die zu erfüllenden Anforderungen hinsichtlich Umwelteinflüssen (Temperaturstabilität, Alterungsbeständigkeit etc.).

Es hat sich gezeigt, dass Polyolefine als polymere Basis für die Schicht A und/oder die Schicht B besonders geeignet sind, auch wenn andere Polymere als Basis der Schichten ebenfalls eingesetzt werden können.

Bei Dehnung über die Streckgrenze (Yield Point, bei ca. 10 % Dehnung) hinaus wird die Schicht B weitgehend elastisch aber die Schicht A überwiegend plastisch verformt. Lässt man die Folienanordnung relaxieren, also sich entspannen, verformt diese sich dreidimensional das heißt, der Verbund wird länger, dicker und schmaler als vor der Belastung durch die Dehnung. Damit dieser Effekt deutlich ausgeprägt ist, sollte die Schicht B deutlich dicker sein als die Schicht A. Insbesondere sollte die Dicke der Schicht B mindestens das 3fache, vorzugsweise das 5fache der Dicke der Schicht A betragen.

In weiter bevorzugter Ausgestaltung ist zumindest eine Schicht, insbesondere die Schicht B, des Folienaufbaus geschäumt. Die Schäumung ermöglicht eine relativ große Dicke der Schicht, ohne dass ein zusätzlicher Materialeinsatz erforderlich wäre. Da für die Einstellung des spezifischen Biegemoduls einer Schicht jedoch nur die Dicke relevant ist, kann durch eine Schäumung auf preiswerte Weise eine Erhöhung des spezifischen Biegemoduls erzielt werden.

In bevorzugter Ausgestaltung weist die Folienanordnung nach der Verstreckung einen, oder zwei in Längsrichtung geschlitzte Hohlzylinder auf. Die unterschiedliche Ausgestaltung der beiden Schichten A, B führt also dazu, dass sich die Folienanordnung während Dehnung und anschließender Relaxation um ihre Längsachse aufrollt.

Da die Schicht B aufgrund ihrer hohen Elastizität selbsthaftend sein kann und diese Eigenschaft zum Verblocken der Folienrolle führen kann, empfiehlt es sich eine nicht zum Verblocken neigende Schicht C aufzubringen. Unter dem Verblocken wird dabei verstanden, wenn sich die aufgewickelte Folienanordnung nicht oder nur schwer, ggf. auch nur stellenweise, abziehen lässt. Eine zusätzliche Schicht C, die insbesondere nicht selbsthaftend ausgebildet ist, verbessert somit die Verarbeitbarkeit der Folienanordnung im Herstellprozess. Die Schicht C ist vorzugsweise wie auch die Schichten A, B polymerbasiert ausgebildet. Ferner muss die Schicht C nicht unmittelbar mit der Schicht B verbunden sein, es können auch weitere Schichten zwischen der Schicht B und der Schicht C vorgesehen sein. Bevorzugt für einen möglichst kompakten Aufbau der Folienanordnung ist allerdings eine unmittelbare Anordnung der Schicht C auf der Schicht B, so dass sich eine Schichtenreihenfolge A, B, C ergibt.

Eine zusätzliche Schicht C ist zudem besonders vorteilhaft, wenn sie an der der Schicht A gegenüberliegenden Seite der Schicht B angeordnet ist. Die Schicht B wird somit von beiden Seiten gekapselt und vor Beschädigung und Verunreinigung geschützt. Die dritte Schicht vereinfacht zudem eine präzise Einstellung der gewünschten Verformung des Folienaufbaus.

Bestehen die Schichten A und C aus dem identischem oder ähnlichem Material, sind also basierend auf gleichartigen Polymeren ausgebildet, und weisen sie darüber hinaus die gleiche Dicke auf, so bildet sich nicht der bevorzugte dreidimensional geformte Körper aus, sondern es entsteht eine flache Folie mit rauer Oberfläche ähnlich der eines fein gekreppten Papiers. Daher sollten die Schichten A und C unterschiedliche Zusammensetzung oder bei gleicher Zusammensetzung jedenfalls eine unterschiedliche Dicke aufweisen.

Wenn eine Schicht C vorhanden ist, sollte die Dicke der Schicht A mindestens das 1,5fache vorzugsweise mindestens das 2,0fache der Dicke der Schicht C betragen. Bestehen die Schichten A und C aus einem unterschiedlichen Material so kann selbst bei gleicher Dicke der Schichten A und C ein dreidimensional geformter Körper entstehen. Dies ist jedoch abhängig von dem spezifischen Biegemodul E_{S} der jeweiligen Schichten. Das spezifische Biegemodul ist definiert durch den Biegemodul des Materials E_{B} der betreffenden Schicht multipliziert mit der Dicke der jeweiligen Schicht. Das Verhältnis des spezifischen Biegmoduls E_{S} der Schicht A zum spezifischen Biegmodul E_{S} der Schicht B sollte größer 20, vorzugsweise größer 30 sein. Ferner sollte die Schicht C ebenfalls einen relativ hohen Zugverformungsrest, insbesondere einen Zugverformungsrest von mindestens 60 %, vorzugsweise von mindestens 70 %, ganz bevorzugt von mindestens 90 %, aufweisen, um die plastische Verformung der Folienanordnung zu verstärken.

Der Zugverformungsrest der Schicht A und/oder der Schicht C kann in bevorzugter Ausgestaltung durch den Zusatz von Kohlenwasserstoffharzen, wie sie beispielsweise bereits für so genannte Twist-Verpackungsfolien (Bonbonverpackungen) eingesetzt werden, wunschgemäß eingestellt und darüber verbessert werden.

Beispiele für bevorzugte Rohstoffe der Schichten A und C sind thermoplastische Polyolefine, Polyamide, Polystyrole und Polyester. Weiter bevorzugte Rohstoffe sind Polyolefine wie Ethylenvinylacetat (EVA), Ethylenacrylat (EA), Ethylenmethacrylat (EMA), low density Polyethylen (PE-LD), linear low density Polyethylen (PE-LLD), very low density linear Polyethylen (PE-VLD), Polypropylen Homopolymer (PP-H), Polypropylen Copolymer (PP-C) (impact, also mit Ethylen-Propylen Kautschuk copolymerisiert, oder random, also mit zufällig in der Kette verteilten Comonomeren). Polymere der Schichten A und/oder C weisen vorzugsweise einem Biegemodul E_{B} von über 1300 MPa besonders bevorzugt von über 1800 MPa auf und sind vorzugsweise jeweils zu mindestens 50 Gew.-%, besonders bevorzugt mindestens 90 Gew.-% in der Schicht A bzw. C enthalten.

Beispiele für bevorzugte Rohstoffe der Schicht B sind thermoplastische Elastomere auf Basis von: Polyolefinen (TPO), Polyamiden (TPA), Polyurethanen (TPU), Styrolblockcopolymeren (TPS) und Polyestern (TPC). Weiter bevorzugte Rohstoffe sind Polyolefincopolymere wie Ethylen-Vinylacetat (EVA), Ethylenacrylat (EA), weiche Polyethylenelastomere wie Affinity™, Engage™, Exact™, Tafmer™, weiche Polypropylencopolymere wie Vistamaxx™, Versify™ welche durch Random-Struktur einen niedrigen Schmelzpunkt aufweisen, und elastomere heterophasige Polyolefine (zum Beispiel mit Blockstruktur) wie Infuse™, Hifax™, Adfle™ oder Softell™. Beispiele für Styrolelastomere sind Kraton™, Hybrar™, Septon™, Cariflex™, Vector™ und Styroflex™. Das Polymer der Schicht B weist vorzugsweise einen Biegemodul E_{B} von unter 1000 MPa, besonders bevorzugt unter 100 MPa, auf und ist vorzugsweise zu mindestens 50 Gew.-%, besonders bevorzugt zu mindestens 90 Gew.-%, in der Schicht B enthalten.

Die Folienanordnung ist insbesondere so ausgebildet, dass sie bei 10 % Dehnung eine Kraft senkrecht zum Querschnitt, also ggf. in Laufrichtung der Extrusionslinie (MD - machine direction) und quer zur Laufrichtung (CD - cross direction) von höchstens 10 N/cm, vorzugsweise höchstens 5 N/cm, aufweist. Die Bruchdehnung beträgt dabei vorzugsweise mindestens 400 %. Ferner ist die Folienanordnung vorzugsweise derart ausgebildet, dass ihre Gesamtdicke etwa 20 µm bis etwa 150 µm, bevorzugt etwa 40 µm bis etwa 80 µm beträgt.

Die Folienanordnung, insbesondere der beiden Schichten A, B, kann durch Kalandrieren mit nachfolgender Kaschierung oder, vorzugsweise, durch Coextrusion hergestellt werden. Dabei wird die Folienanordnung bevorzugt im Flachfolienextrusionsprozess (T-die, Cast, Gießfolie) produziert. Die Folienanordnung ist unverstreckt damit sie eine hinreichende Dehnfähigkeit aufweisen kann, d.h. sie ist nicht in teilkristallinem Zustand in eine oder mehrere Richtungen zwangsorientiert worden. Eine Orientierung im geschmolzenen Zustand, wie sie bei o.g. Herstellprozessen auftreten, ist keine (kontrollierte) Verstreckung (Reckung).

In weiter bevorzugter Ausgestaltung kann die Folienanordnung in einer oder mehreren Schichten übliche Additive wie Füllstoffe, Pigmente, Impactmodifier, Alterungsschutz-, Antiblock-, Schäumungs- (Treib-), Lichtschutz-, Nukleierungs- oder Gleitmittel enthalten. Die Folienanordnung kann zudem durch Prägung, Coronabehandlung, Beschichtung, wie z. B. Primerung oder Bedruckung, modifiziert sein.

Die Folienanordnung wird als Träger für Klebeartikel wie Klebebänder oder Klebeetiketten verwendet. Hierzu weist die Folienanordnung eine Klebeschicht auf, die vorzugsweise unterhalb der Schicht C angeordnet ist. Die Klebeschicht ist vorzugsweise auf Basis einer Haftklebemasse ausgebildet.

### Prüfmethoden

Die Messungen werden bei einem Prüfklima von 23°C ± 1°C und 50 ± 5 % rel. Luftfeuchte durchgeführt.

Die Dichte der Polymere wird nach ISO 1183 ermittelt und in g/cm³ angegeben. Der Schmelzindex wird nach ISO 1133 bei 190 °C und 2,16 kg geprüft und in g/10 min angegeben. Der Kristallitschmelzpunkt (T_{cr}) wird mit DSC (differential scanning calorimetry) bei einer Aufheizrate von 10 K/min nach ISO 3146 ermittelt. Der Biegemodul (flexural modulus) ist nach ASTM D 790 (2 % Secant) zu bestimmen.

Das Zugdehnungsverhalten des Klebebandes wird an Prüflingen vom Typ 2 (rechteckige 150 mm lange und nach Möglichkeit 15 mm breite Prüfstreifen) nach DIN EN ISO 527-3/2/300 mit einer Prüfgeschwindigkeit von 300 mm/min, einer Einspannlänge von 100 mm und einer Vorkraft von 0,3 N/cm ermittelt, wobei die Muster zur Ermittlung der Daten mit scharfen Klingen zugeschnitten wurden. Das Zugdehnungsverhalten wird in Maschinenrichtung (MD) gemessen. Die Kraft wird in N/Streifenbreite und die Bruchdehnung in % angegeben. Die Prüfergebnisse, insbesondere die Bruchdehnung (Reißdehnung), sind durch eine hinreichende Zahl von Messungen statistisch abzusichern.

Der Zugverformungsrest (konstante Dehnung) wird in Anlehnung an DIN 7724 bestimmt, wobei die Prüfgeschwindigkeit 100 mm/min, die Einspannlänge 50 mm beträgt und die Probendimensionen denen eines Folienstreifens nach DIN EN ISO 527 entsprechen.

Weitere Einzelheiten, Merkmale und Ziele der vorliegenden Erfindung werden nachfolgend anhand von Ausführungsbeispielen näher erläutert. In der Zeichnung zeigt
- Fig. 1: in schematischer Darstellung den Aufbau der Folienanordnung,
- Fig. 2 a-c: verschiedene Arten der Tubizität der Folienanordnung nach Dehnung und Relaxation.

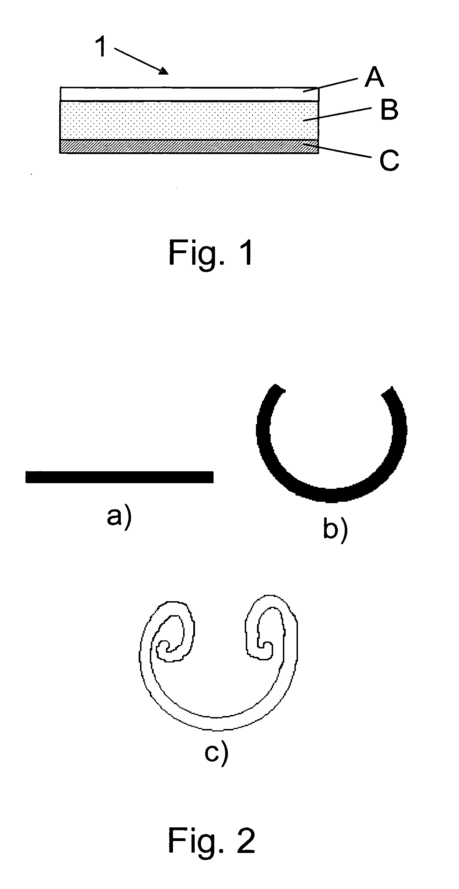

Fig. 1 zeigt in schematischer Darstellung eine Folienanordnung 1, die als Träger für Klebeartikel wie Klebebänder oder Etiketten eingesetzt wird. Die Folienanordnung weist eine Schicht A sowie eine Schicht B auf, wobei die Dicke der Schicht B deutlich größer als die Dicke der Schicht A ist. Die Schichten sind hinsichtlich ihres jeweiligen Zugverformungsrests so abgestimmt, dass dieser bei der Schicht A mindestens 60 %, bei der Schicht B maximal 50 % beträgt. Ferner ist noch eine Schicht C vorgesehen, deren Dicke ebenfalls kleiner ist als die Dicke der Schicht B. Ferner weist auch die Schicht C einen relativ hohen Zugverformungsrest auf. Der daraus resultierende Zugverformungsrest der Folienanordnung 1 im Ganzen ist dabei nicht entscheidend.

Die Schichten A, B, C sind vorzugsweise jeweils unmittelbar miteinander im Kontakt und bilden so die Schichtfolge A, B, C, so dass die Schicht B von den Schichten A, C eingeschlossen ist. Die nähere Ausgestaltung der jeweiligen Schichten kann beispielhaft den nachfolgenden Beispielen entnommen werden.

Fig. 2 zeigt Arten der Verformung der Folienanordnung 1 nach Dehnen und anschließender Relaxation an. Als Tubizität Typ 1-3 wird folgendes Verhalten der Folienanordnung 1 nach Dehnen und Relaxieren unter den zuvor genannten Bedingungen der Bestimmung des Zugverformungsrestes bezeichnet: Typ 1 ist ein Muster welches im Wesentlichen nur zweidimensional verformt wurde (Fig. 2a), Typ 2 ist ein Muster das sich zu einem längs geschlitzten Hohlzylinder formt (Fig. 2b) und Typ 3 ist ein Muster, welches zwei, einseitig miteinander verbundene Hohlzylinder (Fig. 2c) ausbildet.

### Beispiel 1

Auf einer Flachfolienextrusionsanlage wird eine Folienanordnung 1 mit folgendem Rezepturaufbau_hergestellt:
Schicht 1 (A), 11 µm, Borealis HD 905 CF, E_{B} = 2100 MPa, E_{S} = 23,1 N/mm
Schicht 2 (B), 45 µm Exxon VM 1100, E_{B} = 13,6 MPa, E_{S} = 0,612 N/mm
Schicht 3 (C), 7 µm, Borealis HD 905 CF, E_{B} = 2100 MPa, E_{S} = 14,7 N/mm

| | |
|---|---|
| Zugmodul in MD & CD: | 155 MPa |
| Bruchdehnung: | 675 % |
| Zugspannung bei 1% Dehnung | 2,26 MPa |
| Zugspannung bei 10 % Dehnung | 6,25 MPa |
| Zugfestigkeit | 11,96 MPa |
| Zugverformungsrest | 39 % |
| Tubizität | Typ 3 |

### Beispiel 2

Folienanordnung 1, hergestellt analog Beispiel 1:
Schicht 1 (A), 9 µm, Borealis HD 905 CF, E_{B} = 2100 MPa, E_{S} = 18,9 N/mm
Schicht 2 (B), 56 µm Exxon VM 1100, E_{B} = 13,6 MPa, E_{S} = 0,762 N/mm
Schicht 3 (C), 4 µm, Borealis HD 905 CF, E_{B} = 2100 MPa, E_{S} = 8,4 N/mm

| | |
|---|---|
| Zugmodul in MD & CD: | 181 MPa |
| Bruchdehnung: | 948 % |
| Zugspannung bei 1% Dehnung | 1,94 MPa |
| Zugspannung bei 10 % Dehnung | 5,54 MPa |
| Zugfestigkeit | 16,42 MPa |
| Zugverformungsrest | 43 % |
| Tubizität | Typ 2 |

### Beispiel 3

### Folienanordnung 1, hergestellt analog Beispiel 1

Schicht 1 (A), 9 µm, Dowlex 2032, E_{B} = 1745 MPa, E_{S} = 15,7 N/mm
Schicht 2 (B), 32 µm Styroflex 2G66, = 83 MPa, E_{S} = 2,656 N/mm
Schicht 3 (C), wie Schicht 1

| | |
|---|---|
| Zugmodul in MD & CD: | 164 MPa |
| Bruchdehnung: | 378 % |
| Zugspannung bei 1 % Dehnung | 1,55 MPa |
| Zugspannung bei 10 % Dehnung | 6,3 MPa |
| Zugfestigkeit | 19,3 MPa |
| Tubizität | Typ 1 |

### Beispiel 4

### Folienanordnung 1, hergestellt analog Beispiel 1

Schicht 1 (A), 16 µm, Dow 7C06, E_{B} = 1280 MPa, E_{S} = 20,48 N/mm
Schicht 2 (B), 35 µm Versify 2300, E_{B} = 32 MPa, E_{S} = 1,12 N/mm
Schicht 3 (C), 2 µm, Dow 7C06, E_{B} = 1280 MPa, E_{S} = 2,56 N/mm

| | |
|---|---|
| Tubizität | Typ 2 |

### Beispiel 5

### Folienanordnung 1, hergestellt analog Beispiel 1

Schicht 1 (A), 24 µm, Dow 7C06, E_{B} = 1280 MPa, E_{S} = 30,72 N/mm
Schicht 2 (B), 60 µm Versify 2300 geschäumt mit 1,5% Clariant Hydrocerol, E_{B} = 28 MPa, E_{S} = 1,68 N/mm

| | |
|---|---|
| Tubizität | Typ 2 |

### Vergleichsbeispiel 1

Einschichtfolien 30 µm, Exxon VM 1100, E_{B} = 13,6 MPa, E_{S} = 0,408 N/mm

| | |
|---|---|
| Zugmodul in MD & CD: | 13,5 MPa |
| Bruchdehnung: | 830 % |
| Zugspannung bei 1 % Dehnung | 0,94 MPa |
| Zugspannung bei 10 % Dehnung | 3,42 MPa |
| Zugfestigkeit | 14 MPa |
| Zugverformungsrest | 43 % |
| Tubizität | Typ 1 |

**Vergleichsbeispiel 2**

Einschichtfolien 30 µm, Basell HP 501 D, E_{B} = 1400 MPa, E_{S} = 42 N/mm

| | |
|---|---|
| Zugmodul in MD & CD: | 1364MPa |
| Bruchdehnung: | 413 % |
| Zugspannung bei 1% Dehnung | 11 MPa |
| Zugspannung bei 10 % Dehnung | 32 MPa |
| Zugfestigkeit | 186 MPa |
| Zugverformungsrest | 8 % |
| Tubizität | Typ 1 |

## Patentansprüche

1. Klebeartikel mit einer Folienanordnung, aufweisend zumindest eine Klebeschicht, vorzugsweise eine Klebeschicht auf Basis einer Haftklebmasse, wobei
die Folienanordnung eine Schicht A und eine Schicht B, aufweist
die Schicht A und die Schicht B polymerbasiert ausgebildet sind und die Schichten A, B unverstreckt sind,
**dadurch gekennzeichnet,**
**dass** die Schicht A und die Schicht B einen voneinander unterschiedlichen Zugverformungsrest aufweisen,
**dass** die Schicht A einen Zugverformungsrest von mindestens 60% aufweist und
**dass** die Schicht B einen Zugverformungsrest von maximal 50% aufweist,
wobei die Zugverformungsreste wie in der Beschreibung spezifiziert in Anlehnung an DIN 7724 bestimmt werden.

2. Klebeartikel nach Anspruch 1, **dadurch gekennzeichnet,**
**dass** die Schichten A, B unmittelbar übereinander angeordnet sind.

3. Klebeartikel nach Anspruch 1 oder 2, **dadurch gekennzeichnet,**
**dass** die Schicht A einen Zugverformungsrest von mindestens 70 %, vorzugsweise von mindestens 90 % aufweist und/oder
**dass** die Schicht B einen Zugverformungsrest von maximal 40 % aufweist.

4. Klebeartikel nach einem der vorhergehenden Ansprüche, **dadurch gekennzeichnet,**
**dass** die Schicht A und die Schicht B basierend auf gleichartigen Polymeren ausgebildet sind.

5. Klebeartikel nach einem der vorhergehenden Ansprüche, **dadurch gekennzeichnet,**
**dass** die Schicht A und/oder die Schicht B basierend auf Polyolefin ausgebildet sind.

6. Klebeartikel nach einem der vorhergehenden Ansprüche, **dadurch gekennzeichnet,**
**dass** die Folienanordnung jedenfalls nach Dehnung um 500 % und anschließender Relaxation einen dreimensionalen Körper *(kein Flächenelement)* ausbildet,
vorzugsweise, dass selbige jedenfalls nach Dehnung um 500 % und anschließender Relaxation einen oder zwei Hohlzylinder in Längsrichtung ausbildet.

7. Klebeartikel nach einem der vorhergehenden Ansprüche, **dadurch gekennzeichnet,**
**dass** die Dicke der Schicht B mindestens das 3fache, vorzugsweise das 5fache, der Dicke der Schicht A beträgt.

8. Klebeartikel nach einem der vorhergehenden Ansprüche, **dadurch gekennzeichnet,**
**dass** für die Folienanordnung die Kraft bei 10 % Dehnung höchstens 10 N/cm, vorzugsweise höchstens 5 N/cm, beträgt.

9. Klebeartikel nach einem der vorhergehenden Ansprüche, **dadurch gekennzeichnet,**
**dass** die Dicke der Folienanordnung 20 µm bis 150 µm, vorzugsweise 40 µm bis 80 µm, beträgt.

10. Klebeartikel nach einem der vorhergehenden Ansprüche, **dadurch gekennzeichnet,**
**dass** die Folienanordnung eine zusätzliche Schicht C aufweist und dass die Schicht C polymerbasiert ausgebildet ist,
vorzugsweise, dass die Schicht B in unmittelbarem Kontakt zur Schicht A angeordnet ist und die Schicht C in unmittelbarem Kontakt zur Schicht B angeordnet ist.

11. Klebeartikel nach Anspruch 10, **dadurch gekennzeichnet,**
**dass** die Schicht C basierend auf Polyolefin ausgebildet ist und/oder
**dass** die Schicht C einen Zugverformungsrest von mindestens 60 %, vorzugsweise von mindestens 70 %, weiter vorzugsweise von mindestens 90% aufweist.

12. Klebeartikel nach Anspruch 10 oder 11, **dadurch gekennzeichnet,**
**dass** die Dicke der Schicht A mindestens das 1,5fache, vorzugsweise mindestens das 2fache, der Dicke der Schicht C beträgt.

13. Klebeartikel nach einem der vorhergehenden Ansprüche, **dadurch gekennzeichnet,**
**dass** das Verhältnis des spezifischen Biegemoduls E_{S} der Schicht A zum spezifischen Biegmodul E_{S} der Schicht B größer 20, vorzugsweise größer 30, ist,
wobei das spezifische Biegemodul der Schichten E_{S} als Biegemodul des Materials E_{B} der betreffenden Schicht, gemessen nach ASTM D 790 (2% Secant), multipliziert mit der Dicke der jeweiligen Schicht, definiert ist.

14. Klebeartikel nach einem der vorhergehenden Ansprüche, **dadurch gekennzeichnet,**
**dass** die Schicht A einen Rohstoff mit einem Biegemodul gemessen nach ASTM D 790 (2% Secant) von mindestens 1300 MPa, vorzugsweise von mindestens 1800 MPa enthält,
weiter vorzugsweise, dass die Schicht A diesen Rohstoff zu mindestens 50 Gew.-%, besonders bevorzugt zu mindestens 90 Gew.%, enthält.

15. Klebeartikel nach einem der vorhergehenden Ansprüche, **dadurch gekennzeichnet,**
**dass** die Schicht B einen Rohstoff mit einem Biegemodul gemessen nach ASTM D 790 (2% Secant) von maximal 1000 MPa, vorzugsweise von maximal 100 MPa enthält,
weiter vorzugsweise, dass die Schicht B diesen Rohstoff zu mindestens 50 Gew.-%, besonders bevorzugt zu mindestens 90 Gew.-%, enthält.

16. Klebeartikel nach einem der vorhergehenden Ansprüche, **dadurch gekennzeichnet dass** die Folienanordnung durch Coextrusion hergestellt ist.

17. Klebeartikel nach einem der vorhergehenden Ansprüche, **dadurch gekennzeichnet,**
**dass** mindestens eine der Schichten der Folienanordnung geschäumt ist, vorzugsweise, dass die Schicht B geschäumt ist.

18. Klebeartikel nach einem der vorhergehenden Ansprüche, **dadurch gekennzeichnet,**
**dass** mindestens eine der Schichten der Folienanordnung einen Füllstoff oder ein Kohlenwasserstoffharz enthält.

## Claims

1. Adhesive article comprising a film arrangement, featuring at least one adhesive layer, preferably an adhesive layer based on a pressure-sensitive adhesive,
the film arrangement featuring a layer A and a layer B,
layer A and layer B being of polymer-based formation, and layers A and B being unstretched, **characterized**
**in that** layer A and layer B have different tension sets from one another,
**in that** layer A has a tension set of at least 60% and
**in that** layer B has a tension set of not more than 50%,
the tension sets being determined as specified in the description in accordance with DIN 7724.

2. Adhesive article according to Claim 1, **characterized in that** layers A and B are disposed directly above one another.

3. Adhesive article according to Claim 1 or 2, **characterized in that** layer A has a tension set of at least 70%, preferably of at least 90%, and/or in that layer B has a tension set of not more than 40%.

4. Adhesive article according to any of the preceding claims, **characterized in that** layer A and layer B are formed on the basis of polymers of the same kind.

5. Adhesive article according to any of the preceding claims, **characterized in that** layer A and/or layer B are formed on the basis of polyolefin.

6. Adhesive article according to any of the preceding claims, **characterized in that** the film arrangement, even after extension by 500% and subsequent relaxation, forms a three-dimensional body *(not* a *sheetlike element),*
preferably **in that** said arrangement, even after extension by 500% and subsequent relaxation, forms one or two hallow cylinders in longitudinal direction.

7. Adhesive article according to any of the preceding claims, **characterized in that** the thickness of layer B is at least three times, preferably five times, the thickness of layer A.

8. Adhesive article according to any of the preceding claims, **characterized in that**, for the film arrangement, the force at 10% extension is not more than 10 N/cm, preferably not more than 5 N/cm.

9. Adhesive article according to any of the preceding claims, **characterized in that** the thickness of the film arrangement is 20 µm to 150 µm, preferably 40 µm to 80 µm.

10. Adhesive article according to any of the preceding claims, **characterized in that** the film arragement features an additional layer C and **in that** layer C is a polymer-based formation,
preferably **in that** layer B is disposed in direct contact to layer A, and layer C is disposed in direct contact to layer B.

11. Adhesive article according to Claim 10, **characterized in that** layer C is formed on the basis of polyolefin and/or
**in that** layer C has a tension set of at least 60%, preferably of at least 70%, more preferably of at least 90%.

12. Adhesive article according to Claim 10 or 11, **characterized in that** the thickness of layer A is at least 1.5 times, preferably at least 2 times, the thickness of layer C.

13. Adhesive article according to any of the preceding claims, **characterized in that** the ratio of the specific flexural modulus E_{S} of layer A to the specific flexural modulus E_{S} of layer B is greater than 20, preferably greater than 30,
the specific flexural modulus of the layers E_{S} being defined as the flexural modulus of the material E_{B} of the layer in question, measured in accordance with ASTM D 790 (2% secant), multiplied by the thickness of the respective layer.

14. Adhesive article according to any of the preceding claims, **characterized in that** layer A comprises a raw material having a flexural modulus measured in accordance with ASTM D 790 (2% secant) of at least 1300 MPa, preferably of at least 1800 MPa,
more preferably **in that** layer A contains said raw material at not less than 50% by weight, more preferably not less than 90% by weight.

15. Adhesive article according to any of the preceding claims, **characterized in that** layer B comprises a raw material having a flexural modulus measured in accordance with ASTM D 790 (2% secant) of not more than 1000 MPa, preferably of not more than 100 MPa,
more preferably **in that** layer B contains said raw material at not less than 50% by weight, more preferably not less than 90% by weight.

16. Adhesive article according to any of the preceding claims, **characterized in that** the film arrangement is produced by coextrusion.

17. Adhesive article according to any of the preceding claims, **characterized in that** at least one of the layers of the film arrangement is foamed, preferably **in that** layer B is foamed.

18. Adhesive article according to any of the preceding claims, **characterized in that** at least one of the layers of the film arrangement comprises a filler or a hydrocarbon resin.

## Revendications

1. Article adhésif présentant un système de feuilles et présentant au moins une couche adhésive, de préférence une couche adhésive à base d'une pâte adhésive,
le système de feuilles présentant une couche A et une couche B,
la couche A et la couche B étant formées à partir de polymère et les couches A, B n'étant pas étirées, **caractérisé en ce que**
la couche A et la couche B présentent des restes différents de déformation par traction,
**en ce que** la couche A présente un reste de déformation par traction d'au moins 60 % et **en ce que** la couche B présente un reste de déformation par traction d'au plus 50 %,
les restes de déformation par traction étant déterminés de la façon spécifiée dans la description, conformément à la norme DIN 7724.

2. Article adhésif selon la revendication 1, **caractérisé en ce que** les couches A, B sont disposées directement l'une au-dessus de l'autre.

3. Article adhésif selon les revendications 1 ou 2, **caractérisé en ce que** la couche A présente un reste de déformation par traction d'au moins 70 % et de préférence d'au moins 90 % et/ou **en ce que** la couche B présente un reste de déformation par traction d'un maximum 40 %.

4. Article adhésif selon l'une des revendications précédentes, **caractérisé en ce que** la couche A et la couche B sont formées sur base de polymères de même type.

5. Article adhésif selon l'une des revendications précédentes, **caractérisé en ce que** la couche A et/ou la couche B sont formées à partir de polyoléfines.

6. Article adhésif selon l'une des revendications précédentes, **caractérisé en ce que** l'ensemble de feuilles forme un corps tridimensionnel (et non un élément de surface) en tout cas après un allongement de 500 % et ensuite relaxation, de préférence de telle sorte qu'en tout cas après un allongement de 500 % et ensuite relaxation, ce système forme un ou deux cylindres creux dans le sens de sa longueur.

7. Article adhésif selon l'une des revendications précédentes, **caractérisé en ce que** l'épaisseur de la couche B représente au moins 3 fois et de préférence 5 fois l'épaisseur de la couche A.

8. Article adhésif selon l'une des revendications précédentes, **caractérisé en ce que** pour le système de feuilles, la force à exercer pour obtenir un allongement de 10 % est d'au plus 10 N/cm et de préférence d'au plus 5 N/cm.

9. Article adhésif selon l'une des revendications précédentes, **caractérisé en ce que** l'épaisseur du système de feuilles est de 20 µm à 150 µm et de préférence de 40 µm à 80 µm.

10. Article adhésif selon l'une des revendications précédentes, **caractérisé en ce que** le système de feuilles présente une couche supplémentaire C et **en ce que** la couche C est formée à partir de polymères et de préférence **en ce que** la couche B est disposée en contact direct avec la couche A et la couche C en contact direct avec la couche B.

11. Article adhésif selon la revendication 10, **caractérisé en ce que** la couche C est formée à partir de polyoléfines et/ou **en ce que** la couche C présente un reste de déformation par traction d'au moins 60 %, de préférence d'au moins 70 % et de manière encore plus préférable d'au moins 90 %.

12. Article adhésif selon les revendications 10 ou 11, **caractérisé en ce que** l'épaisseur de la couche A représente au moins 1,5 fois et de préférence au moins 2 fois l'épaisseur de la couche C.

13. Article adhésif selon l'une des revendications précédentes, **caractérisé en ce que** le rapport entre le module spécifique de flexion E_{S} de la couche A et le module spécifique de flexion E_{S} de la couche B est supérieur à 20 et de préférence supérieur à 30, le module spécifique de flexion des couches E_{S} étant défini comme étant le module de flexion du matériau E_{B} de la couche concernée, mesuré selon ASTM D 790 (sécante à 2 %) et multiplié par l'épaisseur de la couche concernée.

14. Article adhésif selon l'une des revendications précédentes, **caractérisé en ce que** la couche A contient une matière première dont le module de flexion mesuré selon ASTM D 790 (sécante à 2 %) est d'au moins 1 300 MPa, de préférence d'au moins 1 800 MPa et de manière encore plus préférable **en ce que** la couche A contient cette matière première à au moins 50 % en poids et de façon particulièrement préférable à au moins 90 % en poids.

15. Article adhésif selon l'une des revendications précédentes, **caractérisé en ce que** la couche B contient une matière première dont le module de flexion mesuré selon ASTM D 790 (sécante à 2 %) est d'au plus 1 000 MPa, de préférence d'au plus 100 MPa et de manière encore plus préférable **en ce que** la couche B contient cette matière première à au moins 50 % en poids et de façon particulièrement préférable à au moins 90 % en poids.

16. Article adhésif selon l'une des revendications précédentes, **caractérisé en ce que** le système de feuilles est fabriqué par coextrusion.

17. Article adhésif selon l'une des revendications précédentes, **caractérisé en ce qu'**au moins une des couches du système de feuilles est moussée et de préférence **en ce que** la couche B est moussée.

18. Article adhésif selon l'une des revendications précédentes, **caractérisé en ce qu'**au moins une des couches du système de feuilles contient une charge ou une résine d'hydrocarbure.
